# FASCICULE DE BREVET EUROPEEN

(11) **EP 1 953 027 B1**
(45) Date de publication et mention de la délivrance du brevet: **04.04.2012**
(21) Numéro de dépôt: 07291459.1
(22) Date de dépôt: 05.12.2007
(51) Int. Cl.: B60K 28/04, B66F 9/06

(54) **Dispositif de commande d'un engin de manutention**
Vorrichtung zum Steuern eines Fördergeräts
Device for controlling a handling appliance

(30) Priorité: 31.01.2007 FR 0700692
(43) Date de publication de la demande: 06.08.2008
(73) Titulaire: MANITOU BF, 44150 Ancenis (FR)
(72) Inventeur: Braud, Marcel-Claude, 44150 Ancenis (FR)
(74) Mandataire: Kaspar, Jean-Georges

(56) Documents cités:
- EP-A- 1 721 774
- DE-A1- 19 822 695
- DE-U1- 20 213 915

## Description

L'invention est relative à un dispositif de commande d'un engin de manutention, du type comportant des capteurs de paramètres physiques destinés à définir un état logique de présence ou d'absence d'un opérateur ou conducteur de l'engin de manutention.

Actuellement, la détection de l'opérateur ou du conducteur de l'engin de manutention s'effectue de manière classique par un contact de siège qui est actionné par le poids de l'opérateur assis sur le siège.

Le document EP 1 721 774 A1 décrit un véhicule industriel comportant un siège muni d'un capteur à changement d'état, d'après le préambule de la revendication 1.

Cette disposition connue s'avère inefficace ou dangereuse lorsque l'opérateur ou conducteur de l'engin de manutention doit se lever partiellement pour observer l'avant de la machine lors de certaines opérations.

En effet, dans ce cas, le déchargement du siège est susceptible de modifier le fonctionnement de l'engin de manutention et de causer un accident: on a ainsi constaté des pertes d'entraînement de machine de manutention, résultant d'un passage au neutre de la transmission, conduisant à des emballements de la machine dévalant une pente ou un devers.

Pour remédier à cet inconvénient, certains opérateurs ou conducteurs provoquent une indication de présence par le capteur de siège, en posant un poids important en permanence sur le siège de l'engin de manutention.

Une autre possibilité est d'ajouter une temporisation en parallèle au contact du siège pour empêcher le déclenchement immédiat des fonctions de sécurité liées à la perte de présence de l'opérateur ou conducteur de l'engin de manutention.

Enfin, la technique du contact de siège ne permet pas une surveillance permanente de l'état du contact de siège. Dans le cas d'un contact de siège défectueux, une présence de conducteur ou d'opérateur de l'engin de manutention peut être signalée en permanence par le contact défectueux. Cette absence de surveillance ne permet aucune vérification ni aucune maintenance du capteur de siège, puisque aucune anomalie n'est signalée en l'absence de changement d'état du capteur de siège.

Pour éviter ces inconvénients, on a imaginé d'utiliser plusieurs capteurs de siège redondants, en estimant que la probabilité de défaillance simultanée des capteurs redondants serait très faible. Cette solution présente l'inconvénient d'un coût supplémentaire qui n'élimine pas cependant les possibilités de défaillance du mode commun aux capteurs redondants.

Ainsi, une défaillance d'une alimentation ou d'une connexion commune aux capteurs redondants pourra entraîner une indication erronée commune, quelque soit l'état de chaque capteur de siège.

Un premier but de l'invention est de remédier à l'état de la technique connue, en proposant un nouveau dispositif utilisant des capteurs de types différents.

Un deuxième but de l'invention est de proposer un nouveau dispositif permettant d'éviter les inconvénients liés à l'utilisation d'un contact de siège.

L'invention a pour objet un dispositif de commande d'un engin de manutention, du type comportant des capteurs de paramètres physiques destinés à définir un état logique de présence ou d'absence d'un opérateur ou conducteur de l'engin de manutention, caractérisé par le fait que les capteurs comprennent au moins un capteur impulsionnel destiné à être actionné par un opérateur ou conducteur, au moins un capteur normalement ouvert et au moins un capteur normalement fermé formant contacts de fermeture d'une porte de cabine de l'engin de manutention, de manière à éviter l'utilisation unique d'un contact de siège.

Selon d'autres caractéristiques alternatives de l'invention :
- les capteurs comprennent plusieurs capteurs impulsionnels destinés à être actionnés simultanément par un opérateur ou conducteur de l'engin de manutention.
- les capteurs comprennent plusieurs capteurs impulsionnels destinés à être actionnés séquentiellement par un opérateur ou conducteur de l'engin de manutention.
- les capteurs comprennent un capteur de vitesse d'avancement.
- le dispositif comporte un premier moyen de traitement du signal du capteur normalement ouvert et un deuxième moyen, distinct dudit premier moyen, de traitement du signal du capteur normalement fermé.
- le capteur impulsionnel est un capteur d'appui sur l'accélérateur.
- le capteur impulsionnel est un capteur d'actionnement par l'opérateur situé dans la cabine de l'engin de manutention.
- le dispositif comporte des moyens de traitement de signaux représentatifs de l'état de transmission et de l'état hydraulique de l'engin de manutention.
- le dispositif comporte une unité centrale de traitement reliée au système d'avancement et de transmission.
- le dispositif comporte une unité centrale de traitement reliée au système hydraulique ou d'actionnement de l'engin de manutention.

L'invention sera mieux comprise grâce à la description qui va suivre donnée à titre d'exemple non limitatif en référence aux dessins annexés dans lesquels :
La figure 1 représente schématiquement un diagramme fonctionnel d'un dispositif selon l'invention.
La figure 2 représente schématiquement un organigramme logique de fonctionnement d'un dispositif selon l'invention.

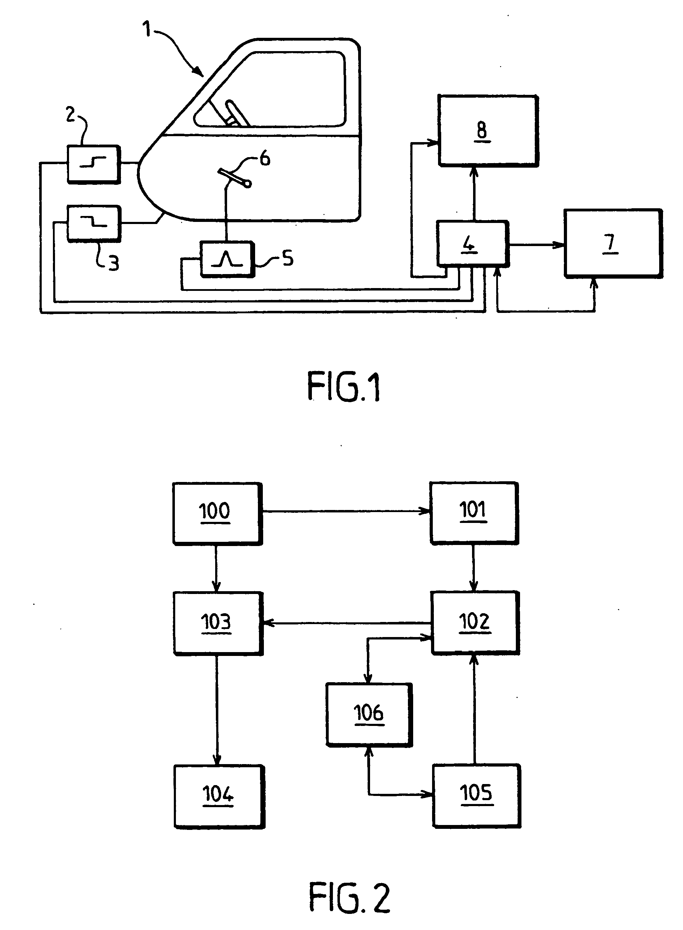

En référence à la figure 1, un dispositif selon l'invention est destiné à un engin de manutention comportant un poste fermé ou clos de conduite, par exemple une cabine 1.

Le dispositif selon l'invention comporte des capteurs de paramètres physiques destinés à définir un état logique de présence ou d'absence d'un opérateur ou conducteur de l'engin de manutention.

Un capteur 2 normalement ouvert forme contact de fermeture de la porte de cabine de l'engin de manutention.

Un capteur 3 normalement fermé forme contact de fermeture de la porte de cabine de l'engin de manutention.

Les capteurs 2 et 3 sont des capteurs à changement d'état émettant un signal indiquant que la porte de la cabine est fermée.

Avantageusement, les capteurs 2 et 3 à changement d'état sont reliés à des moyens de traitement de signal indépendants et distincts.

Un premier moyen de traitement du signal du capteur 2 normalement ouvert peut être intégré dans une unité centrale de traitement 4.

Un deuxième moyen distinct dudit premier moyen de traitement peut également être intégré dans l'unité centrale 4 de traitement pour traiter le signal du capteur 3 normalement fermé.

Les capteurs à changement d'état 2 et 3 fournissent de manière redondante l'information selon laquelle la cabine 1 forme un espace clos contenant ou non un conducteur ou un opérateur d'engin de manutention.

Pour confirmer la présence d'un opérateur ou conducteur d'engin de manutention à l'intérieur de la cabine 1, un capteur impulsionnel 5 est prévu à l'intérieur de la cabine pour être actionné par l'opérateur ou le conducteur de l'engin de manutention, en confirmant ainsi sa présence à l'intérieur de la cabine fermée.

On peut prévoir par exemple un capteur impulsionnel 5 relié à la pédale d'accélérateur 6.

Ainsi, après entrée de l'opérateur ou du conducteur de l'engin de manutention dans la cabine 1, et fermeture de la porte de la cabine 1 détectée par les capteurs 2 et 3 à transition d'état, le conducteur ou l'opérateur de l'engin de manutention effectue une action sur un organe intérieur à la cabine de l'engin de manutention pour émettre un signal impulsionnel à l'aide d'un capteur impulsionnel 5, de manière à signaler sa présence effective à l'intérieur de la cabine.

On peut également, sans sortir du cadre de la présente invention, utiliser toute autre commande, bouton, levier ou autre moyen situé à l'intérieur de la cabine 1 pour effectuer ce signalement.

Ainsi, l'opérateur peut actionner toute autre commande située à l'intérieur de la cabine, ou effectuer plusieurs actions simultanées sur les commandes situées à l'intérieur de la cabine, ou effectuer des actions séquentielles sur des commandes situées à l'intérieur de la cabine, ou effectuer des actions complémentaires, dans un ordre prédéterminé, sur des commandes situées à l'intérieur de la cabine, ou exécuter plusieurs actions prédéterminées sur un ensemble de commandes situées à l'intérieur de la cabine.

L'unité 4 centrale de traitement agit en fonction des signaux reçus des capteurs 2, 3 et 5 pour autoriser ou bloquer le fonctionnement du système de transmission et d'avancement 7, et autoriser ou bloquer le fonctionnement du système hydraulique 8 ou des actionneurs de l'engin de manutention.

Grâce à l'invention, le fait que l'opérateur soit ou non assis sur le siège ne détermine plus le fonctionnement de l'engin de manutention auquel le dispositif selon l'invention est destiné.

Avantageusement, l'unité centrale 4 de traitement mémorise les signaux émis par les capteurs 2 et 3 à changement d'état et l'impulsion transmise par le capteur impulsionnel 5, de manière à définir une présence de l'opérateur en cabine tant que la porte de la cabine 1 n'est pas ouverte par l'opérateur installé dans la cabine.

Grâce à l'invention, l'utilisation de deux capteurs 2 et 3 d'état initial différent et de traitement indépendant assure une indication fiable de l'état fermé de la porte de la cabine.

Le système hydraulique 8 et le système d'avancement et de transmission 7 transmettent de préférence à l'unité centrale 4 de traitement des informations décrivant leur état, de manière à initialiser le fonctionnement du dispositif selon l'invention.

A titre d'exemple, l'unité 7 de transmission et d'avancement peut transmettre à l'unité 4 centrale de traitement une indication de vitesse d'avancement de l'engin de manutention.

De préférence, si la vitesse de l'engin de manutention est ou devient inférieure à un seuil prédéterminé, par exemple de 2 km/heure, l'unité centrale de traitement assure le blocage de l'avancement et de la transmission, ainsi que le blocage des moyens hydrauliques de fonctionnement de l'engin de manutention.

En référence à la figure 2, le fonctionnement d'un dispositif selon l'invention débute par une étape 100 d'initialisation.

A l'étape 100 d'initialisation, l'unité centrale 4 de traitement reçoit les informations représentatives de l'état de transmission et de l'état hydraulique de l'engin de manutention et les traite en fonction des signaux reçus par les capteurs 2 et 3 à changement d'état et par le capteur impulsionnel 5.

Dans le cas où l'unité centrale de traitement ne détecte pas de présence de conducteur, ou détecte une anomalie du système hydraulique ou du système de transmission et d'avancement de l'engin de manutention, le dispositif passe à l'étape 101.

Dans le cas où la présence du conducteur est détectée et où aucune anomalie majeure du système hydraulique ou du système de transmission et d'avancement de l'engin de manutention n'est détectée, le dispositif passe à l'étape 103.

A l'étape 101, le dispositif selon l'invention bloque entièrement le fonctionnement de l'engin de manutention, en mettant en oeuvre le moyen de parc et en interdisant tout fonctionnement du système de transmission et du système hydraulique de l'engin de manutention.

A l'étape 103, le dispositif selon l'invention force la transmission de l'engin de manutention au neutre et permet le passage à l'étape 104.

A l'étape 104, tant que la porte de la cabine n'est pas ouverte, et dès que l'opérateur effectue l'opération demandée sur le capteur impulsionnel 5, le pilotage complet de l'engin de manutention est autorisé, en particulier le fonctionnement du système d'avancement et de transmission est autorisé, ainsi que le fonctionnement du système hydraulique ou d'actionnement de l'engin de manutention.

A l'étape 101, lorsque la présence d'un opérateur a été détectée par la combinaison des capteurs 2 et 3 à changement d'état et du capteur impulsionnel 5, le déplacement de la machine peut être demandé par l'opérateur ou le conducteur de l'engin de manutention à l'étape 102.

La manipulation effectuée à l'étape 102 est placée sous surveillance d'une étape 106.

A l'étape 106, l'unité centrale de traitement traite les informations en provenance de la transmission et du système hydraulique et d'actionnement de l'engin de manutention.

Si l'opérateur ou le conducteur est indiqué comme présent et si la vitesse demandée est supérieure à un seuil prédéterminé, l'étape 106 autorise le dispositif à passer de l'étape 102 à l'étape 103 de forçage de la transmission au neutre.

Si le fonctionnement de l'engin de manutention correspond à une étape 105 d'arrêt automatique et de position parc, le passage de l'étape 105 à l'étape 102 est subordonné à une autorisation délivrée après traitement des informations conformément à l'étape 106 par l'unité 4 centrale de traitement.

Ainsi, grâce à l'invention, la commande d'un engin de manutention est constamment assurée par le dispositif selon l'invention en fonction de la présence ou de l'absence d'un opérateur ou d'un conducteur de l'engin de manutention, cette présence ou cette absence étant définie par un état logique liée à la présence du conducteur ou de l'opérateur à l'intérieur d'un espace prédéterminé tel qu'une cabine 1 et à un signal impulsionnel provoqué par l'opérateur ou le conducteur à l'intérieur de cet espace, avant de permettre un déplacement ou un actionnement de l'engin de manutention.

L'invention décrite en référence a un mode de réalisation particulier n'y est nullement limitée, mais couvre au contraire toute modification de forme ou toute variante de réalisation dans le cadre des revendications annexées.

## Revendications

1. Dispositif de commande d'un engin de manutention, du type comportant des capteurs de paramètres physiques destinés à définir un état logique de présence ou d'absence d'un opérateur ou conducteur de l'engin de manutention, les capteurs comprenant au moins un capteur impulsionnel (5) destiné à être actionné par un opérateur ou conducteur, **caractérisé par** au moins un capteur (2) normalement ouvert et au moins un capteur (3) normalement fermé formant contacts de fermeture d'une porte de cabine (1) de l'engin de manutention.

2. Dispositif selon la revendication 1, **caractérisé par le fait que** les capteurs comprennent plusieurs capteurs impulsionnels (5) destinés à être actionnés simultanément par un opérateur ou conducteur de l'engin de manutention.

3. Dispositif selon la revendication 1 ou la revendication 2, **caractérisé par le fait que** les capteurs comprennent plusieurs capteurs impulsionnels (5) destinés à être actionnés séquentiellement par un opérateur ou conducteur de l'engin de manutention.

4. Dispositif selon l'une quelconque des revendications 1 à 3, **caractérisé par le fait que** les capteurs comprennent un capteur de vitesse d'avancement.

5. Dispositif selon l'une quelconque des revendications précédentes, **caractérisé par le fait que** le dispositif comporte un premier moyen de traitement du signal du capteur (2) normalement ouvert et un deuxième moyen, distinct dudit premier moyen, de traitement du signal du capteur (3) normalement fermé.

6. Dispositif selon la revendication 1, **caractérisé par le fait que** le capteur impulsionnel (5) est un capteur d'appui sur l'accélérateur (6).

7. Dispositif selon la revendication 1, **caractérisé par le fait que** le capteur impulsionnel est un capteur d'actionnement par l'opérateur situé dans la cabine (1) de l'engin de manutention.

8. Dispositif selon la revendication 1, **caractérisé par le fait que** le dispositif comporte des moyens de traitement de signaux représentatifs de l'état de transmission (7) et de l'état hydraulique (8) de l'engin de manutention.

9. Dispositif selon la revendication 8, **caractérisé par le fait que** le dispositif comporte une unité centrale (4) de traitement reliée au système (7) d'avancement et de transmission.

10. Dispositif selon la revendication 8 ou la revendication 9, **caractérisé par le fait que** le dispositif comporte une unité centrale (4) de traitement reliée au système (8) hydraulique ou d'actionnement de l'engin de manutention.

## Claims

1. A control device for a handling appliance, of the type including sensors of physical parameters designed to define a logical state of presence or absence of an operator or driver of the handing appliance, the sensors comprising at least one impulse sensor (5) designed to be actuated by an operator or driver, **characterized by** at least one sensor (2) normally open and at least one sensor (3) normally closed forming closing contacts for a cabin door (1) of the handling appliance.

2. The device according to claim 1, wherein the sensors comprise several impulse sensors (5) designed to be actuated simultaneously by an operator or driver of the handling appliance.

3. The device according to claim 1 or claim 2, wherein the sensors comprise several pulse sensors (5) designed to be actuated sequentially by an operator or driver of the handling appliance.

4. The device according to any one of claims 1 to 3, wherein the sensors comprise a forward speed sensor.

5. The device according to any one of the preceding claims, wherein the device includes a first means for processing the signal from the sensor (2) normally open and a second means, separate from the first means, for processing the signal from the sensor (3) normally closed.

6. The device according to claim 1, wherein the pulse sensor (5) is a sensor for detecting pressure on the accelerator (6).

7. The device according to claim 1, wherein the pulse sensor is a sensor detecting actuation by the operator situated in the cabin (1) of the handling appliance.

8. The device according to claim 1, wherein the device includes means for processing signals representing the transmission state (7) and hydraulic state (8) of the handling appliance.

9. The device according to claim 8, wherein the device includes a central processing unit (4) connected to the forward movement and transmission system (7).

10. The device according to claim 8 or claim 9, wherein the device includes a central processing unit (4) connected to the hydraulic or actuation system (8) of the handling appliance.

## Patentansprüche

1. Vorrichtung zum Steuern einer Transporteinrichtung der Bauart, die Sensoren für physikalische Parameter aufweist, die dazu bestimmt sind, einen logischen Zustand der Anwesenheit oder Abwesenheit eines Bedieners oder Fahrers der Transporteinrichtung zu definieren, wobei die Sensoren mindestens einen Impulssensor (5) umfassen, der dazu bestimmt ist, von einem Bediener oder Fahrer bedient zu werden, durch mindestens einen normal geöffneten Sensor (2) und mindestens einen normal geschlossenen Sensor (3) **gekennzeichnet**, die Schließkontakte einer Kabinentür (1) der Transporteinrichtung bilden.

2. Vorrichtung nach Anspruch 1, **dadurch gekennzeichnet, dass** die Sensoren mehrere Impulssensoren (5) umfassen, die dazu bestimmt sind, gleichzeitig von einem Bediener oder Fahrer der Transporteinrichtung bedient zu werden.

3. Vorrichtung nach Anspruch 1 oder Anspruch 2, **dadurch gekennzeichnet, dass** die Sensoren mehrere Impulssensoren (5) umfassen, die dazu bestimmt sind, sequentiell von einem Bediener oder Fahrer der Transporteinrichtung bedient zu werden.

4. Vorrichtung nach einem der Ansprüche 1 bis 3, **dadurch gekennzeichnet, dass** die Sensoren einen Sensor der Vorschubgeschwindigkeit umfassen.

5. Vorrichtung nach einem der vorangehenden Ansprüche, **dadurch gekennzeichnet, dass** die Vorrichtung ein erstes Mittel zur Verarbeitung des Signals des normalerweise geöffneten Sensors (2) umfasst und ein zweites Mittel, das sich vom ersten Mittel unterscheidet, zur Verarbeitung des Signals des normalerweise geschlossenen Sensors (3).

6. Vorrichtung nach Anspruch 1, **dadurch gekennzeichnet, dass** der Impulssensor (5) ein Drucksensor auf das Gaspedal (6) ist.

7. Vorrichtung nach Anspruch 1, **dadurch gekennzeichnet, dass** der Impulssensor ein Sensor ist, der vom in der Kabine (1) der Transporteinrichtung befindlichen Bediener bedient wird.

8. Vorrichtung nach Anspruch 1, **dadurch gekennzeichnet, dass** die Vorrichtung Mittel zur Verarbeitung von Signalen umfasst, die für den Übertragungszustand (7) und den Hydraulikzustand (8) der Transporteinrichtung repräsentativ sind.

9. Vorrichtung nach Anspruch 8, **dadurch gekennzeichnet, dass** die Vorrichtung eine zentrale Verarbeitungseinheit (4) umfasst, die mit dem Fortbewegungs- und Übertragungssystem (7) verbunden ist.

10. Vorrichtung nach Anspruch 8 oder Anspruch 9, **dadurch gekennzeichnet, dass** die Vorrichtung eine zentrale Verarbeitungseinheit (4) umfasst, die mit dem hydraulischen bzw. Bediensystem (8) der Transporteinrichtung verbunden ist.
